# EUROPÄISCHE PATENTSCHRIFT

(11) **EP 0 622 542 B1**
(45) Veröffentlichungstag und Bekanntmachung des Hinweises auf die Patenterteilung: **28.08.1996**
(21) Anmeldenummer: 93106830.8
(22) Anmeldetag: 27.04.1993
(51) Int. Cl.: F02P 17/00, G01M 15/00, B60G 17/015

(54) **Verbrennungsaussetzererkennung mit Schlechtwegerkennung**
Misfire detection with rough road detection
Détection de ratés d'allumage avec détection d'une route rugueuse

(43) Veröffentlichungstag der Anmeldung: 02.11.1994
(73) Patentinhaber: SIEMENS AKTIENGESELLSCHAFT, 80333 München (DE)
(72) Erfinder: Angermaier, Anton, Dipl.-Ing. (FH), W-8300 Landshut (DE); Wier, Manfred, Dr.-Ing., W-8411 Wenzenbach (DE)

(56) Entgegenhaltungen:
- EP-A- 0 366 384
- EP-A- 0 497 475
- DE-A- 4 200 752
- FR-A- 2 682 718
- GB-A- 2 251 949
- SAE TECHNICAL PAPER NR. 900232 1990, WARRENDALE, USA Seiten 9 - 20 G. PLAPP ET AL 'METHODS OF ONBOARD MISFIRE DETECTION'
- PATENT ABSTRACTS OF JAPAN vol. 17, no. 282 (M-1420)31. Mai 1993 & JP-A-50 10 199
- PATENT ABSTRACTS OF JAPAN vol.16, no. 282 (M-1269)23. Juni 1992 & JP-A-40 72 450

## Beschreibung

### Verbrennungsaussetzererkennung mit Schlechtwegerkennung

Die Erfindung betrifft ein Verfahren zur Erkennung von Verbrennungsaussetzern bei Brennkraftmaschinen, wobei die Kurbelwellengeschwindigkeit ausgewertet wird und der Einfluß von Schlechtwegstrecken berücksichtigt wird.

Verbrennungsaussetzer können bei Brennkraftmaschinen mit nachgeschaltetem Abgaskatalysator zur Schädigung des Katalysators führen, da durch Nachreaktionen des unverbrannten Kraftstoff-Luftgemisches im Katalysator hohe Temperaturen auftreten. Außerdem wird durch Verbrennungsaussetzer auch die Abgasqualität verschlechtert.

Zur Erkennung von Verbrennungsaussetzern wird bei vorliegender Erfindung ein Verfahren benutzt, das die momentane Winkelgeschwindigkeit der Kurbelwelle mißt.
Solch ein Verfahren ist beispielsweise bekannt aus der EP-A-0 576 705 (europäischen Anmeldung 92111078.9 desselben Anmelders). Verbrennungsaussetzer führen zu einer vorübergehenden Verlangsamung der Winkelgeschwindigkeit, die erkannt wird, indem die Zeitspannen gemessen werden (Segmentzeiten), während derer sich die Kurbelwelle um eine definierte Winkelspanne dreht.

Diese gemessenen Zeiten finden nicht direkt Verwendung, sondern es werden aus ihnen sogenannte Laufunruhewerte berechnet, bei denen je nach verwendetem Verfahren verschiedene dynamische Einflüsse, die beim Betrieb der Brennkraftmaschine auftreten (Beschleunigung, Verzögerung) kompensiert werden. Diese Laufunruhewerte werden dann zur Erkennung von Verbrennungsaussetzern mit Grenzwerten verglichen.

Bei solchen Verfahren, bei denen die durch die Verbrennungsaussetzer verursachte Laufunruhe ausgewertet wird, besteht die Gefahr von Fehlerkennungen beim Befahren von Schlechtwegstrecken. Dabei kann die Kurbelwelle über den Antriebsstrang zu Schwingungen angeregt werden. Die dabei auftretenden Winkelbeschleunigungen der Kurbelwelle können sogar die Werte übersteigen, die bei Verbrennungsaussetzern auftreten. Dies kann zu Fehlerkennungen führen.

Man kann diese Fehlerkennungen dadurch verhindern, daß beim Auftreten einer Schlechtwegstrecke die Verbrennungsaussetzererkennung ausgeblendet wird.

Bei den bisher bekannten Verfahren zur Schlechtwegstreckenerkennung wird die Beschleunigung der Karosserie überprüft. Dies erfordert aber einen teueren Beschleunigungssensor.

Zur Schlechtwegstreckenerkennung können auch die Raddrehzahlen auf Beschleunigungswerte kontrolliert werden, die größer sind als die mit der Brennkraftmaschine beim jeweiligen Fahrzeug möglichen Beschleunigungen. Solche hohen Beschleunigungen lassen dann auf eine Schlechtwegstrecke schließen.
So ein Verfahren ist aber wirtschaftlich nur da sinnvoll, wo solche Raddrehzahlsensoren sowieso vorhanden sind, also beispielsweise bei Fahrzeugen mit einer ABS-Anlage.

Es besteht daher die Aufgabe, ein Verfahren anzugeben, das eine Verbrennungsaussetzererkennung mit Berücksichtigung des Schlechtwegstreckeneinflusses ermöglicht, ohne daß dazu ein zusätzlicher Hardwareaufwand notwendig ist.

Gelöst wird diese Aufgabe durch ein Verfahren, wie es im vorliegenden Hauptanspruch definiert ist. Es wird dabei anhand des Erscheinungsbildes der Segmentzeitschwankungen unterschieden, ob tatsächlich ein Verbrennungsaussetzer vorliegt oder ob die Schwankungen auf den Einfluß einer Schlechtwegstrecke zurückzuführen sind. Dieses Verfahren kommt ohne zusätzliche Hardware aus.

Bei Verwendung eines Erkennungsverfahrens, bei dem die Laufunruhewerte bei tatsächlich vorliegenden, systematischen Verbrennungsaussetzern negativ werden (einen negativen Grenzwert unterschreiten), liegen die Laufunruhewerte der nicht aussetzenden Zylinder eindeutig im positiven Bereich. Bei einem Erkennungsverfahren mit positiven Laufunruhewerten bei Verbrennungsaussetzern liegen die Laufunruhewerte der nicht aussetzenden Zylinder dann entsprechend eindeutig im negativen Bereich.
Bei Schlechtwegstrecken liegt dagegen eine annähernde Gleichverteilung der Laufunruhewerte um die Nullage vor. Da bei normalem Motorbetrieb ohne Verbrennungsaussetzer die Laufunruhewerte ebenfalls in der Nähe der Nullage liegen, wird die Überprüfung auf eine Schlechtwegstrecke erst bei einem angezeigten Verbrennungsaussetzer aktiviert. Wenn dann keine Schlechtwegstrecke diagnostiziert wird, so wird der Verbrennungsaussetzer bestätigt.

Das Verfahren wird im folgenden anhand der Zeichnungsfigur noch näher erläutert. Die Zeichnungsfigur zeigt eine schematische Darstellung der Verfahrensschritte des erfindungsgemäßen Verfahrens.

Zunächst wird im Verfahrensschritt S1 über ein beliebiges Verfahren, das die Laufunruhe der Kurbelwelle auswertet, eine Verbrennungsaussetzererkennung durchgeführt. Dabei wird ein Laufunruhewert LU berechnet. Im folgenden Ausführungsbeispiel wird angenommen, daß, wenn kein Verbrennungsaussetzer vorliegt, der Laufunruhewert sich oberhalb eines negativen Grenzwertes befindet und wenn ein Verbrennungsaussetzer auftritt, der Laufunruhewert diesen negativen Grenzwert unterschreitet.
Im Verfahrensschritt S2 wird dieser Laufunruhewert LU mit einem Laufunruhegrenzwert LU_SCHW verglichen. Der Grenzwert wird beispielsweise in Abhängigkeit von Last und Drehzahl gemäß dem aktuellen Betriebspunkt der Brennkraftmaschine einem Kennfeld entnommen.
Ist der Laufunruhewert LU größer oder gleich dem Grenzwert LU_SCHW, so liegt kein Verbrennungsaussetzer vor und es wird wieder zum Verfahrensanfang A zurückgegangen.
Ist der Laufunruhewert LU aber kleiner als der Grenzwert, so wird ein Verbrennungsaussetzer vermutet und es wird weiter verzweigt zum Verfahrensschritt S3. Es wird nun im folgenden geprüft, ob der angezeigte Verbrennungsaussetzer tatsächlich einer ist, oder ob dieser negative Laufunruhewert von der Rückwirkung einer Schlechtwegstrecke auf die Kurbelwelle herrührt.
Dazu wird im Verfahrensschritt S3 über ein wählbares Meßintervall, hier im Beispiel über den Abtastzeitraum n-3 bis n+3, die Summe SLU der Laufunruhewerte gebildet. Die Größe des Meßintervalls ist abhängig von der Zylinderzahl und der gewünschten Genauigkeit.

Über obiges Verfahren oder ein beliebiges anderes Verfahren zur Verbrennungsaussetzererkennung wird festgestellt, wieviel Verbrennungsaussetzer während des obigen Meßintervalls vermutlich aufgetreten sind. Entsprechend dem Ergebnis wird in Verfahrensschritt S4 bei Vorliegen von einem Aussetzer zum Verfahrensschritt S5 verzweigt und beim Vorliegen von mindestens zwei vermuteten Aussetzern zum Verfahrensschritt S6.

In einer anderen Ausführungsform des Verfahrens kann der rechte Verzweigungsarm wegfallen, d.h. unabhängig von der Zahl der Verbrennungsaussetzer erfolgt die weitere Berechnung wie hier in Verfahrensschritt S5 und S7 dargestellt.

Im Verfahrensschritt S5 bzw. S6 wird die Summe der Laufunruhewerte SLU um den kleinsten LU1K und den größten LU1G bzw. bei zwei oder mehr Aussetzern, wie in Verfahrensschritt S6 dargestellt, auch noch um den zweitkleinsten LU2K und zweitgrößten LU2G Laufunruhewert, der während des Meßintervalls aufgetreten ist, vermindert.

Dann wird im Verfahrensschritt S7 bzw. S8 durch Mittelwertbildung daraus ein sogenannter Schlechtwegstreckenwert DVSLU gebildet.

Im Verfahrensschritt S9 wird dieser Schlechtwegstreckenwert DVSLU mit einem Schlechtwegstreckengrenzwert SWS_SCHW verglichen.
Dieser Schlechtwegstreckengrenzwert SWS_SCHW wird entweder einem Kennfeld in Abhängigkeit von Last und Drehzahl entnommen oder er wird aus dem oben ermittelten Laufunruhegrenzwert LU_SCHW abgeleitet. In der Praxis hat es sich bewährt, den Laufunruhegrenzwert LU_SCHW mit einem Faktor zwischen -1 und 0 zu multiplizieren, um den Schlechtwegstreckengrenzwert SWS_SCHW zu erhalten.
Es ist außerdem möglich, den Schlechtwegstreckenwert DVSLU noch einer gleitenden Mittelung zu unterziehen.

Ist der Schlechtwegstreckenwert DVSLU kleiner oder gleich dem Grenzwert SWS_SCHW, so liegt eine Schlechtwegstrecke vor, der Verbrennungsaussetzer wird nicht bestätigt. Ist der Schlechtwegstreckenwert DVSLU aber größer als der Grenzwert, so liegt keine Schlechtwegstrecke vor, der Verbrennungsaussetzer wird bestätigt.

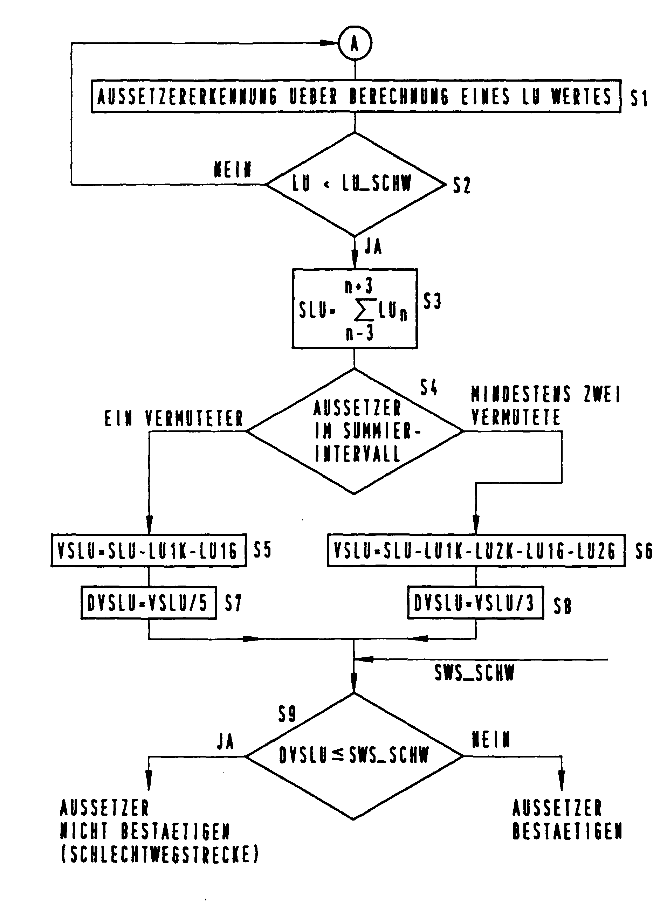

## Patentansprüche

1. Verfahren zum Erkennen von Verbrennungsaussetzern bei Brennkraftmaschinen
**dadurch gekennzeichnet,**
- daß aus den Winkelgeschwindigkeitsschwankungen der Kurbelwelle, die als Segmentzeitschwankungen gemessen werden, ein Laufunruhewert (LU) berechnet wird, der bei Vorliegen eines Verbrennungsaussetzers einen negativen Laufunruhegrenzwert (LU_SCHW) unterschreitet
- und daß wenn der Laufunruhewert (LU) den Laufunruhegrenzwert (LU_SCHW) unterschreitet
- aus aufeinanderfolgend berechneten Laufunruhewerten ein Schlechtwegstreckenwert (DVSLU) berechnet wird, der bei Vorliegen einer Schlechtwegstrecke einen positiven Schlechtwegstreckengrenzwert (SWS_SCHW) unterschreitet oder gleich groß wie dieser ist
- und daß wenn der Schlechtwegstreckenwert (DVSLU) den Schlechtwegstreckengrenzwert (SWS_SCHW) unterschreitet oder gleich groß wie dieser Grenzwert ist, der zuvor angezeigte Verbrennungsaussetzer nicht bestätigt wird, aber
- daß wenn der Schlechtwegstreckenwert (DVSLU) den Schlechtwegstreckengrenzwert (SWS_SCHW) überschreitet der zuvor angezeigte Verbrennungsaussetzer bestätigt wird.

2. Verfahren nach Anspruch 1
**dadurch gekennzeichnet,**
daß der Schlechtwegstreckenwert (DVSLU) berechnet wird,
- indem aufeinanderfolgend berechnete Laufunruhewerte (LU) aufsummiert werden,
- diese Summe (SLU), sofern während des Meßintervalls ein Verbrennungsaussetzer angezeigt wurde, um den größten (LU1G) und kleinsten (LU1K) der während des Meßintervalls aufgetretenen Laufunruhewerte und sofern während des Meßintervalls mindestens zwei Verbrennungsaussetzer angezeigt wurden auch noch um den zweitgrößten (LU2G) und den zweitkleinsten (LU2K) der während des Meßintervalls aufgetretenen Laufunruhewerte vermindert wird und
- aus dieser verminderten Summe (VSLU) der Mittelwert (DVSLU) berechnet wird.

3. Verfahren nach Anspruch 2
**dadurch gekennzeichnet,**
daß die Zahl der zu summierenden Laufunruhewerte der Zylinderzahl entspricht.

4. Verfahren nach Anspruch 1
**dadurch gekennzeichnet,**
daß der Laufunruhegrenzwert (LU_SCHW) abhängig von den aktuellen Betriebsbedingungen der Brennkraftmaschine einem von den Betriebsgrößen - zumindest von Last und Drehzahl-abhängigen Kennfeld entnommen wird.

5. Verfahren nach Anspruch 1
**dadurch gekennzeichnet,**
daß der Schlechtwegstreckengrenzwert (SWS_SCHW) abhängig von den aktuellen Betriebsbedingungen der Brennkraftmaschine einem von den Betriebsgrößen - zumindest von Last und Drehzahl - abhängigen Kennfeld entnommen wird.

6. Verfahren nach Anspruch 1
**dadurch gekennzeichnet,**
daß der Schlechtwegstreckengrenzwert (SWS_SCHW) aus dem Laufunruhegrenzwert (LU_SCHW) berechnet wird.

7. Verfahren nach Anspruch 6
**dadurch gekennzeichnet,**
daß der Schlechtwegstreckengrenzwert (SWS_SCHW) aus dem Laufunruhegrenzwert (LU_SCHW) durch Multiplikation mit einem Faktor vorzugsweise im Bereich von 0 bis -1 berechnet wird.

8. Verfahren nach Anspruch 1
**dadurch gekennzeichnet,**
daß der Schlechtwegstreckenwert (DVSLU) einer gleitenden Mittelung unterzogen wird.

9. Verfahren nach Anspruch 1
**dadurch gekennzeichnet,**
daß das Verfahren nur unterhalb einer vorgebbaren Drehzahl der Brennkraftmaschine durchgeführt wird.

## Claims

1. Method for detecting combustion misfires in internal combustion engines, characterized in that
- the fluctuations in angular speed of the crankshaft, which are measured as segment time fluctuations, are used to calculate a lack-of-smoothness value (LU), which falls below a negative lack-of-smoothness limit value (LU_SCHW) if a combustion misfire is present
- and in that if the lack-of-smoothness value (LU) falls below the lack-of-smoothness limit value (LU_SCHW)
- successively calculated lack-of-smoothness values are used to calculate a value (DVSLU) for a stretch of bad road, which latter falls below or is equal to a positive limit value (SWS_SCHW) for a stretch of bad road, if a stretch of bad road is present,
- and in that if the value (DVSLU) for a stretch of bad road falls below the limit value (SWS_SCHW) for a stretch of bad road or is of equal magnitude to this limit value, the previously indicated combustion misfire is not confirmed, but
- in that the previously indicated combustion misfire is confirmed if the value (DVSLU) for a stretch of bad road exceeds the limit value (SWS_SCHW) for a stretch of bad road.

2. Method according to Claim 1, characterized in that the value (DVSLU) for a stretch of bad road is calculated
- by adding together successively calculated lack-of-smoothness values (LU) to form a sum,
- reducing this sum (SLU) by the largest (LU1G) and smallest (LU1K) of the lack-of-smoothness values which have occurred during the measurement interval, if a combustion misfire has been indicated during the measurement interval, and further reducing the sum by the second-largest, (LU2G) and the second-smallest (LU2K) of the lack-of-smoothness values which have occurred during the measurement interval, if at least two combustion misfires have been indicated during the measurement interval and
- calculating the mean value (DVSLU) from this reduced sum (VSLU).

3. Method according to Claim 2, characterized in that the number of lack-of-smoothness values to be added together corresponds to the number of cylinders.

4. Method according to Claim 1, characterized in that the lack-of-smoothness limit value (LU_SCHW) is taken from a performance graph dependent on the operating variables - at least load and rpm - as a function of the current engine operating conditions.

5. Method according to Claim 1, characterized in that the limit value (SWS_SCHW) for the stretch of bad road is taken from a performance graph dependent on the operating variables - at least load and rpm - as a function of the current engine operating conditions.

6. Method according to Claim 1, characterized in that the limit value (SWS_SCHW) for a stretch of bad road is calculated from the lack-of-smoothness limit value (LU_SCHW).

7. Method according to Claim 6, characterized in that the limit value (SWS_SCHW) for a stretch of bad road is calculated from the lack-of-smoothness limit value (LU_SCHW) by multiplication by a factor, preferably in a range of from 0 to -1.

8. Method according to Claim 1, characterized in that the value (DVSLU) for a stretch of bad road is subjected to sliding averaging.

9. Method according to Claim 1, characterized in that the method is carried out only below a predeterminable engine rpm.

## Revendications

1. Procédé pour identifier des ratés d'allumage dans des moteurs à combustion interne, caractérisé en ce
- qu'à partir des fluctuations de la vitesse angulaire du vilebrequin, qui sont mesurées en tant que fluctuations de segments temporels, on calcule une valeur d'instabilité de marche (LU), qui dans le cas de la présence d'un raté d'allumage, tombe au-dessous d'une valeur limite négative d'instabilité de marche (LU_SCHW), et
- que lorsque la valeur d'instabilité de marche (LU) tombe au-dessous de la valeur limite d'instabilité de marche (LU_SCHW)
- on calcule à partir des valeurs d'instabilité de marche calculées successivement une valeur de section de chaussée déformée (LU), qui, dans le cas de la présence d'une section de chaussée déformée, tombe au-dessous d'une valeur limite positive de section de chaussée déformée (LU_SCHW) ou est égale à cette valeur, et
- que, lorsque la valeur de section de chaussée déformée (DVSLU) tombe au-dessous de la valeur limite de section de chaussée déformée (SWS_SCHW) ou est égale à cette valeur limite, le raté d'allumage indiqué auparavant n'est pas confirmé, mais,
- que, lorsque la valeur de section de chaussée (DVSLU) dépasse la valeur limite de section de chaussée déformée (SWS_SCHW), le raté d'allumage indiqué auparavant est confirmé.

2. Procédé selon la revendication 1 caractérisé en ce
- que la valeur de section de chaussée déformée (DVSLU) est calculée par le fait que des valeurs d'instabilité de marche (LU) calculées successivement sont additionnées,
- dans la mesure où un raté d'allumage a été indiqué pendant l'intervalle de mesure, cette somme (SLU) est diminuée de la plus élevée (LU1G) et de la plus faible (LU1K) des valeurs d'instabilité de marche apparues pendant l'intervalle de mesure, et dans la mesure où au moins deux ratés d'allumage ont été signalés pendant l'intervalle de mesure, la somme est encore également diminuée de la plus élevée en second (LU2G) et de la plus faible en second (LU2K) des valeurs d'instabilité de marche apparues pendant l'intervalle de mesure, et
- la valeur moyenne (DVSLU) est calculée à partir de cette somme réduite (VLSU).

3. Procédé selon la revendication 2, caractérisé en ce que le nombre des valeurs d'instabilité de marche additionnées correspond au nombre des cylindres.

4. Procédé selon la revendication 1, caractérisé en ce que la valeur limite d'instabilité de marche (LU_SCHW) est prélevée d'un champ de caractéristiques qui dépend des paramètres de fonctionnement - au moins de la charge et de la vitesse de rotation - en fonction des conditions actuelles de fonctionnement.

5. Procédé selon la revendication 1, caractérisé en ce que la valeur limite de section de chaussée déformée (WS_SCHW) est prélevée d'un champ de caractéristiques dépendant des paramètres de fonctionnement - au moins de la charge et de la vitesse de rotation -, en fonction des conditions actuelles de fonctionnement du moteur à combustion interne.

6. Procédé selon la revendication 1, caractérisé en ce que la valeur limite de section déformée (SWS_SCHW) est calculée à partir de la valeur limite d'instabilité de marche (LU_SCHW).

7. Procédé selon la revendication 6, caractérisé en ce que la valeur limite de section de chaussée déformée (SWS_SCHW) est calculée à partir de la valeur limite d'instabilité de marche (LU_SCHW) par multiplication par un facteur et de préférence dans la gamme de 0 à -1.

8. Procédé selon la revendication 1, caractérisé en ce que la valeur de section de chaussée déformée (DVSLU) est soumise à une formation ce moyenne glissante.

9. Procédé selon la revendication 1, caractérisé en ce qu'il est mis en oeuvre uniquement au-dessous d'une vitesse de rotation prédéterminée du moteur à combustion interne.
